# EUROPEAN PATENT APPLICATION

(11) **EP 4 822 340 A1**
(43) Date of publication of application: **14.10.2026**
(21) Application number: 26167734.8
(22) Date of filing: 25.03.2026
(51) Int. Cl.: G01N 21/89, G01B 5/00, G01B 11/06

(54) **TRANSLATING SUPPORT FOR ARTICULATING CABLE ABRASION REDUCTION**

(30) Priority: 11.04.2025 US 202519176989
(71) Applicant: Honeywell International Inc., Charlotte, NC 28202 (US)
(72) Inventor: AUSTIN, Jeff, Charlotte, 28202 (US); BESELT, Ron, Charlotte, 28202 (US); REYNEN, Greg, Charlotte, 28202 (US)
(74) Representative: Haseltine Lake Kempner LLP

(57) **Abstract**

Scanning sensor assemblies and method of use. A scanning sensor assembly configured for scanning a sheet material includes a measurement head, a drive belt fixedly coupled the measurement head, a motor coupled to the drive belt, the motor controlling position of the measurement head using the drive belt, an electronics cabinet, and a cable coupling the electronics cabinet to the measurement head. The assembly also includes a moving bearing surface adapted to move with the measurement head, wherein the cable rests against the moving bearing surface, thereby preventing abrasion damage to the cable.

## Description

### BACKGROUND

Scanning sensors are used to detect properties of sheet materials during manufacture to facilitate control over the process and thereby assure sheet quality. The sensors move back and forth in a direction perpendicular to the direction of travel of the sheet. In the art, the term machine direction (MD) refers to the direction of travel of the sheet material during manufacture, and the term cross direction (CD) refers to the direction across the surface of a sheet perpendicular to the MD. To detect variations in sheet materials, scanning sensors are employed that periodically traverse back and forth across a sheet in the CD while detecting values of a selected sheet property such as basis weight or caliper along each scan. The sheet being scanned may be traversed from edge to edge during each scan. The time required for a typical scan is generally between a few seconds to tens of seconds depending on the CD width, which can range up to several meters. Such sensors also measure or monitor the speed of the sheet in the MD, and overall systems are designed to store data related to where, along the sheet length, scanning occurred.

For example, in fabricating anode or cathode electrodes for batteries, such as lithium chemistry batteries, a metal foil from metal rolls is continuously coated with a mixture of active material. To achieve and maintain the quality of continuous, roll-to-roll production of electrodes, measurements take place at several stages of the process. These measurements are used to build a data set of quality factors that are linked to battery performance. Once the continuous roll has exited the process, cutting machines size and shape the finished coated metal foils into sheets of electrodes that are assembled into the cells and batteries.

The scanning machines have several moving parts, with a mobile measurement head moving back and forth in the CD. Articulating cabling is used to provide signal and power paths from a stationary electronics cabinet to the mobile measurement head. The articulating cabling is contained in a jacket material. If the jacket material degrades due to abrasion, debris can be generated, which can fall onto the sheet and contaminate the product. Abrasion can also lead to cable failure, requiring the scanning sensor to go offline for maintenance, which in turn can stop the manufacturing line. New and improved designs for the scanning sensor are desired, which can avoid abrasion of the jacket material on the articulating cabling.

### OVERVIEW

The present inventors have recognized, among other things, that a problem to be solved is the need for new and/or alternative designs for the scanning sensor used in sheet manufacturing addressing and reducing abrasion of the jacket material on the articulating cabling. In illustrative examples, a translating bearing surface is provided in the scanning sensor to prevent jacket material abrasion. In some examples, the drive system belt that is used to move the mobile measurement head is redesigned and used as the translating bearing surface.

A first illustrative and non-limiting example takes the form of a scanning sensor assembly for scanning a sheet material comprising a first measurement head, a first drive belt fixedly coupled to the first measurement head, a first motor coupled to the first drive belt, the first motor controlling position of the first measurement head using the first drive belt, a first electronics cabinet, a first cable coupling the first electronics cabinet to the first measurement head, and a first moving bearing surface adapted to move with the first measurement head, wherein the first cable rests against the first moving bearing surface.

Additionally or alternatively, first moving bearing surface moves with the first measurement head on a 1:1 ratio, to thereby prevent abrasion damage to the first cable.

Additionally or alternatively, the first moving bearing surface is a portion of the first drive belt.

Additionally or alternatively, the first moving bearing surface is a portion of the first drive belt on a far side of the first measurement head, relative to the first electronics cabinet.

Additionally or alternatively, the scanning sensor assembly is adapted to receive the sheet material with the sheet material moving a machine direction, such that the first motor drives the first measurement head in a cross direction perpendicular to the machine direction; the first drive belt has a width and thickness, the width exceeding the thickness, and the first drive belt is positioned with the width parallel to the sheet as the sheet passes in the machine direction.

Additionally or alternatively, the assembly also includes a housing having a first end portion, a second end portion and a sheet metal channel therebetween, wherein: the first motor is positioned in the first end portion; the first drive belt forms a loop from the first end portion to the second end portion, and back to the first end portion; the first measurement head is configured to move back and forth on a line between the first end portion and the second end portion as the first drive belt moves; and the first moving bearing surface is a portion of the first drive belt between the measurement head and the second end portion.

Additionally or alternatively, the first moving bearing surface is a bearing belt separate from the first drive belt.

Additionally or alternatively, the bearing belt is coupled to the first motor by a gear system and a drive shaft.

Additionally or alternatively, the scanning sensor is adapted to receive the sheet material with the sheet material moving a machine direction, such that the first motor drives the measurement head in a cross direction perpendicular to the machine direction; and the first drive belt has a width and thickness, the width exceeding the thickness, and the first drive belt is positioned with the width parallel to the sheet as the sheet passes in the machine direction.

Additionally or alternatively, the scanning sensor is adapted to receive the sheet material with the sheet material moving a machine direction, such that the first motor drives the first measurement head in a cross direction perpendicular to the machine direction; the first drive belt has a width and thickness, the width exceeding the thickness, and the first drive belt is positioned with the width perpendicular to the sheet as the sheet passes in the machine direction.

Additionally or alternatively, the assembly also includes a second measurement head; a second drive belt fixedly coupled to the first measurement head; a second cable coupled to the second measurement head; and a second moving bearing surface adapted to move with the second measurement head, wherein the second cable rests against the second moving bearing surface.

Additionally or alternatively, the second cable couples the second measurement head to the first electronics cabinet.

Additionally or alternatively, the second cable couples the second measurement head to a second electronics cabinet.

Additionally or alternatively, the second drive belt is coupled to the first motor, the first motor controlling position of the second measurement head using the second drive belt.

Additionally or alternatively, the second drive belt is coupled to a second motor, the second motor controlling position of the second measurement head using the second drive belt.

Additionally or alternatively, the first motor and the second motor are controlled to move the first measurement head and the second measurement head synchronously.

Another illustrative and non-limiting example takes the form of a method of operating a scanning sensor in a sheet manufacturing system, the method comprising: controlling a position of a measurement head of the scanning sensor, wherein the measurement head is coupled by a cable to an electronics cabinet; and moving a moving bearing surface with the measurement head, wherein the cable rests on the moving bearing surface, such that the cable is protected from abrasion by the moving bearing surface.

Additionally or alternatively, the step of controlling the position of the measurement head is performed by operating a motor that controls a drive belt, the drive belt fixedly coupled to the measurement head, and the moving bearing surface is a portion of the drive belt.

Additionally or alternatively, the moving bearing surface is a portion of the drive belt located on a far side of the measurement head, relative to the electronics cabinet.

Additionally or alternatively, the step of controlling the position of the measurement head is performed by operating a motor that controls a drive belt, and the moving bearing surface is a portion of a bearing belt separate from the drive belt, further wherein the step of moving the moving bearing surface is performed by controlling movement of the bearing belt.

This overview is intended to introduce the subject matter of the present patent application. It is not intended to provide an exclusive or exhaustive explanation. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 shows an illustrative scanning sensor assembly;
Figure 2 show a system for profile measurement of a sheet of material;
Figure 3 shows an illustrative scanning sensor assembly with a moving bearing surface;
Figure 4 shows another illustrative scanning sensor assembly with a moving bearing surface;
Figure 5 illustrates a gear assembly; and
Figure 6 shows another illustrative scanning sensor assembly with a moving bearing surface.

### DETAILED DESCRIPTION

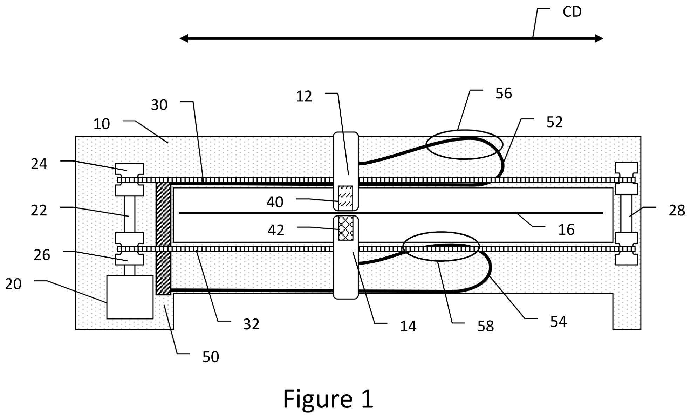

Figure 1 shows an illustrative scanning sensor assembly. The assembly includes a housing 10 having a first measurement head 12 and a second measurement head 14. A sheet material 16 passes between the measurement heads 12, 14. The sheet material 16 moves in a machine direction (MD), which, in Figure 1, would either be directly into the page or comes directly out of the page, depending on line setup. The measurement heads 12, 14 move in synchrony during use in a cross direction (CD), as shown with the arrows, allowing scanning across the full width of the sheet material 16.

To achieve such movement, the assembly has a drive system including a motor 20 which is coupled to a drive shaft 22 that controls the position of two wheels 24, 26. The motor 20, drive shaft 22, and wheels 24, 26 are at a first end or end portion of the housing 10; at the opposed second end or end portion of the housing is a second, free spinning shaft 28 having opposed wheels thereon.

The first wheel 24 is fixed to the drive shaft 22, and carries a first drive belt 30, which is looped around a corresponding wheel on the free spinning shaft 28. The first measurement head 12 is fixedly secured to the first drive belt 30. Likewise, the second wheel 26 is fixed to the drive shaft 22, and carries a second drive belt 32, which is also looped around a corresponding wheel on the free spinning shaft 28. The second measurement head 14 is fixedly secured to the second drive belt 32. When the motor 20 turns the drive shaft 22, each of the first wheel 24 and second wheel 26 turn in a fixed relationship to one another, and thus the positions of the first measurement head 12 and second measurement head 14 are controlled, moving back and forth along the CD. Other examples may use two separate motors in place of the motor 20.

Measurement heads 12, 14 contain measurement devices 40, 42 which can operate in various modes. For instance, one, the other, or both measurement devices 40, 42 may comprise a radiation source that directs a beam of radiation into a moving sheet and a radiation receiver that detects radiation that is transmitted through the sheet material 16. This may be a "transmission mode". Alternatively, the measurement devices 40, 42 can operate in a reflective mode, in which radiation is generated by and received and measured at the same device after reflecting off the sheet material 16. For example, each measurement device 40, 42 may include both a radiation source and detector. The measurement devices 40, 42 can also comprise a combination of reflective and transmissive sensors and/or may be reconfigurable as between transmission and reflective modes. Some examples may include only one measurement head 12, 14 and/or measurement device 40, 42, optionally. Various details and examples can be found, for example, in US PG Pub. 20230391571. Rather than a radiation source, an optical output, a mechanical output (ultrasonic for example) or other sensing/interrogation output with a corresponding sensing input, preferably but not required to be non-contact, may be used.

The measurement devices 40, 42, need to be powered and signals captured by each need to be communicated to the assembly controller, which is contained in an electronics cabinet 50. To this end, first measurement head 12 is coupled by a first cable 52 to the electronics cabinet 50, and second measurement head 14 is coupled by a second cable 54 to the electronics cabinet 50. Each cable 52, 54 has an outer protective jacket and one or more conductors therein, the conductors taking any suitable form (metal wire, optical fiber, etc.), and may take the form of an articulating cable. An articulating cable is a flexible elongated cable which may take any suitable form; the present concepts are not limited to any particular articulating cable design. The cables 52, 54 may be referred to as the powertrack. The powertrack cables 52, 54 are subject to two main types of failure: bending fatigue of the conductors, and abrasion of the jacket material.

The cables 52, 54 are sized so that a portion extending from the electronics cabinet can generally lay flat in a guide channel on the lower bearing surfaces of the housing. Each cable 52, 54 extends past the measurement heads 12, 14 and then bending 180 degrees, back to the measurement heads, as shown. This design protects most of the length of the cables 52, 54 from abrasion during use.

However, as illustrated at 56, 58, abrasion points still exist within the housing 10. In particular, while there is no relative movement along the lower bearing surface inside the housing 10, the upper surface is stationary, but the jackets of the cables 52, 54 rub against the upper surface as shown at 56, 58 with a velocity equal to the velocity of the measurement heads 12, 14. The measurement heads 12, 14 will move back and forth a large number of repetitions, that is, millions of times, as lifespan for modem products may be in the range of 10 million or more repetitions.

Abrasion of the jacket material leads to two issues: premature failure of the conductors and debris generation that must be captured to prevent damage to the product being inspected. The housing 10 is typically designed to contain debris and dust. However, maintenance activities that expose the cables 52, 54 create the possibility of contaminating the process, fixture and/or line. This mechanical containment also adds mass (increasing demands on beam stiffness) and cost. New and different designs are desired.

The aforementioned assembly controller in the electronics cabinet 50 may take many forms, including, for example, a microcontroller or microprocessor, coupled to a memory storing readable instructions for performing methods to be executed, as well as providing configuration of the controller for the various methods to be executed. The controller may include one more application-specific integrated circuits (ASIC) to provide additional or specialized functionality, such as, without limitation a signal processing ASIC that can filter received signals from one or more sensors using digital filtering techniques. Logic circuitry, state machines, and discrete or integrated circuit components may be included as well. The skilled person will recognize many different hardware implementations are available for a controller.

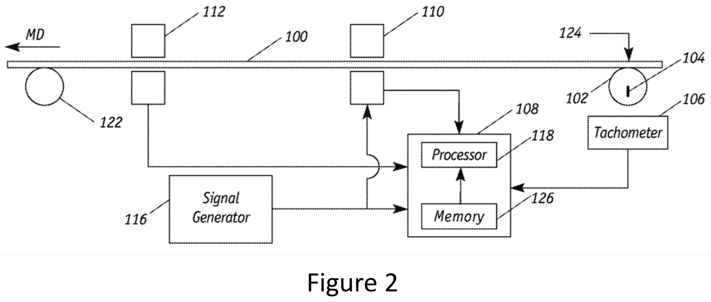

Figure 2 illustrates a system for analyzing a continuous material sheet 100. As indicated the material sheet 100 moves in the MD. The material sheet 100 is supported by rollers 102 and 122. Roller 102, which supports material sheet 100 at position 124, includes a magnet 104 that is monitored by a line tachometer 106, the tachometer 106 being used to monitor the speed/velocity (MD speed) of the material sheet 100. The MD speed can be measured at any position of the material sheet 100. Some examples measure the MD speed near scanning sensor 110 to reduce errors, since the material sheet 100 can stretch. Alternatively, an optical tachometer can be employed.

Located downstream (that is, farther in the MD) are scanning sensors 110 and 112; the distances of the two scanners from position 124 are known. The system includes a control block 108 shown with a processor 118 and memory 126. The system also includes a signal generator 116. In operation, the line tachometer 106 measures the rotation speed of roller 102 and sends pulse signals to controller 108 which converts the rotation speed to MD speed by referencing the radius of roller 102. Scanners 110 and 112 each measure characteristics of the material sheet 100 and transmit corresponding signals to the control block 108. The signal generator 116 sends synchronizing signals to scanner 110 which establishes the origin for the MD position axis. Integration of the velocity over time yields the change in position along the MD.

The scanners 110 and 112 perform binning of MD positions such that instances when the scanning gauge enters and exits in each of the user-defined, cross direction measurements regions (bins) are accurately timestamped. The tachometer 106 counts values that fall within these timestamps which are accumulated and averaged to generate a MD position of each such cross directional bin. Thereafter, the MD position of each bin of the sensor measurement profile is aggregated as an array and displayed as an MD position profile for each cross directional profile. Each sensor signal measuring a sheet property is also aggregated as an array and displayed as a cross direction profile.

Though not shown, process equipment may be included, for example, between the scanners at 110, 112. In this way, the material sheet 100 can be scanned at scanner 110, undergoes a processing step (such as layer deposition on the sheet, baking/curing, etc.) and is then scanned again after the processing step at scanner 112. The data gathered at each scanner 110, 112 may then be used to determine whether process parameters are meeting requirements, for example. The material sheet 110 may be, for example and without limitation, a roll of electrode material having electrochemical coatings applied thereto for use in batteries.

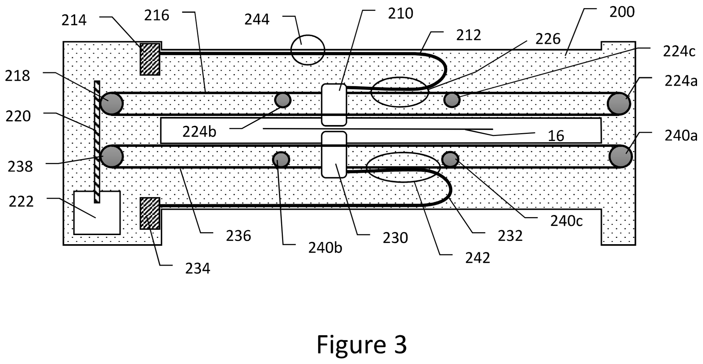

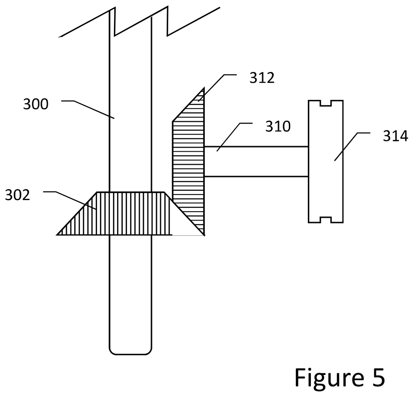

Figure 3 shows an illustrative scanning sensor assembly with moving bearing surfaces. Here, the scanning sensor includes a housing 200. A first measurement head 210 is coupled to a first cable 212, which in turn is coupled to a first electronics cabinet 214 (in this example, two electronics cabinets 214 and 234; this is optional and a single cabinet can be used). The first drive belt 216 can be seen, and has the measurement head 210 fixed thereto. It can be seen that the first drive belt 216 is re-oriented compared to the design of Figure 1, rotated 90 degrees so that the width of the drive belt 216 lies in the horizontal direction. The wheel 218 for the drive belt 216 can be coupled to the drive shaft 220 by gearing, such as a bevel gear (Figure 5), if desired, and driven by motor 222. The drive belt 216 loops around a free wheel at 224a, and, optionally, may be supported by idlers as indicated at 224b and 224c.

As highlighted at 226, the first cable 212 rests against the first drive belt 216. Because both the first cable 212 and the first drive belt 216 are attached to the first measurement head 210, there is no relative motion at location 226, and no abrasion. That is, the first cable 212 and the first drive belt 216 move on a 1:1 ratio or basis in the region of contact at 226.

The portion of the first drive belt 216 in area 226 thus serves as a moving bearing surface adapted to move with the measurement head 210, and the first cable 212 at rests against this moving bearing surface. The region 226 of the first drive belt 216 may be described as being located between the first measurement head 210 and the second end portion of the housing 200, or the free wheel 224a. The region 226 may also be described as being on the far side of the measurement head 210, relative to the electronics cabinet 214.

The (optional) idlers 224c, 224d may support the first drive belt 212, which now bears some additional weight from the cable 212. The force applied by the first belt 212 on the first drive belt 212 may come both from gravity and resistance to bending of the first cable 212. In an alternative configuration, the drive wheel 218 may be positioned opposite of the electronics cabinet 214, that is, for example, with the motor 222 and drive shaft 218 positioned away from the electronics cabinet.

In this example, the first cable 212 is in the upper arm of the housing 200, and has been re-oriented to connect to the electronics cabinet at the top of the upper arm of the housing 200, as shown. If desired, one or more supports may be positioned for example at 244 to hold at least part of the first cable 212 in a static position.

The lower arm of the housing 200 has a similar arrangement as the upper arm. That is, the second measurement head 230 is attached to the lower side of the loop formed by a second drive belt 236. The second drive belt wheel 238 is coupled by gearing to the drive shaft 220 and thus driven by the motor 222. The second drive belt 236 loops around the free wheel 240a and is optionally supported by idlers 240b and 240c against forces applied by the second cable 232, which is coupled to the second electronics cabinet 234. The force generated by the second cable 232 would be primarily caused by resistance against bending of the cable to a relatively small radius.

Again, the second drive belt 236 provides a moving bearing surface for the second cable 232, and moves on a 1:1 basis with each of the second measurement head 230 and the second cable 232. Region 242, for example, may be described as a moving bearing surface, and may further be described as the portion of the second drive belt 236 on the far side of the second measurement head 230, relative to the electronics cabinet 234.

The drive belts 216, 236 may be in the form of a belt having a thickness and a width. The width will generally be at least 2 times the thickness, more often 3 times the thickness or more. In the illustration, the material sheet 16 (which is shown as narrower than would be typical for purposes of illustration only) is thus parallel with the width of the drive belts 216, 236.

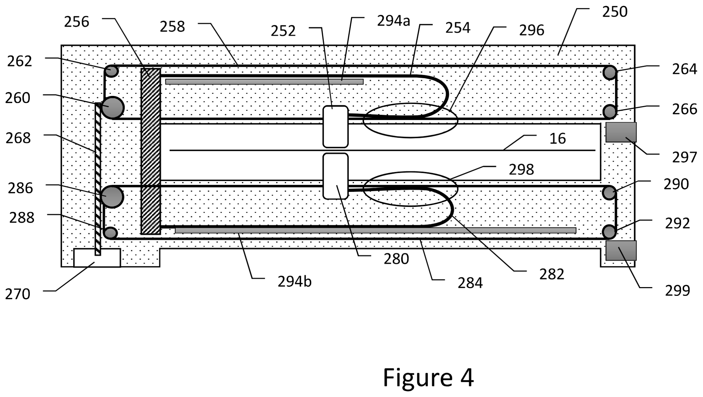

Figure 4 shows another illustrative scanning sensor assembly with moving bearing surface. Starting with the upper arm of the housing 250, the first measurement head 252 attaches to a first cable 254, which is in turn connected to the electronics cabinet 256. The first measurement head 252 is secured to a first drive belt 258, which has in this example a different routing than in Figure 3, now routing outside of the passage of the first cable 254. The drive wheel 260 is coupled (by gearing again) to the drive shaft 268, and in turn to motor 270. Idler wheels or free wheels at 262, 264, 266 support the routing of the first drive belt 258. The first drive belt 258 serves as the moving bearing surface for the first cable 254, particularly in region 296, and moves on a 1:1 basis with the first measurement head 252 and first cable 254.

In the lower arm of the housing 250, the second measurement head 280 attaches to a second cable 282, which is in turn connected to the electronics cabinet 256. The second measurement head 258 is secured to the second drive belt 284. The second drive belt is routed around the second drive wheel 286 and idler wheels 288, 290, 292 to define a path which goes around the cable 282 entirely. The drive wheel 286 is coupled by gearing to drive shaft 268 and motor 270. Optionally, two separate drive motors 270 can be provided, one for each drive wheel 260, 286. To use two separate drive motors in this or other examples may require additional control software and/or devices to maintain registration between the first and second measurement heads 252, 280.

A static bearing surface or shelf can be provided for the cables as well. For example, an upper shelf is shown at 294a in the upper arm of the housing. Likewise a lower shelf is shown at 294b to support the second cable 282.

The drive belts 258, 284 may be in the form of a belt having a thickness and a width. The width will generally be at least 2 times the thickness, more often 3 times the thickness or more. In the illustration, the material sheet 16 (which is shown as narrower than would be typical for purposes of illustration only) is thus parallel with the width of the drive belts 258, 284.

Figure 4 also shows an alternative configuration with motors 297 and 299, optionally used in place of motor 270 and drive shaft 268. With motors 297 and 299, wheels 260 and 286 would be idlers or free-spinning wheels, and wheels 266 and 292 would serve as drive wheels for the drive belts 258 and 284, respectively. These motors 297 and 299 may be positioned away from, that is on the opposite end of the assembly, from the electronics cabinet 256 (which may be a single cabinet as shown, or multiple cabinets may be used). The same portion of each drive belt 258, 284 would still serve as the moving bearing surface in this alternative configuration. Two motors could be placed on the same side as the electronics cabinet, instead, if desired. The movements of the two motors 297, 299 can be controlled to synchronize movements of the measurement heads 252, 280, if desired, though if the measurement heads 252, 280 were used for reflective, rather than transmissive measurements such synchronization could be optionally omitted. Synchronization may include monitoring actual position of the measurement heads 252, 280, such as with position sensors, and/or by linking control signals to each motor 297, 299, or by using the measurement heads themselves to monitor for off-center transmissive signals, for example and without limitation.

Figure 5 illustrates a bevel gear assembly. The first drive shaft 300 carries a first bevel gear 302. A second drive shaft 310 carries a second bevel gear 312. As the first drive shaft 300 turns, the first bevel gear 302 turns and interacts with the second bevel gear 312, transferring torque to the second drive shaft 310. The second drive shaft 310 delivers the torque to the drive wheel 314. Such a construction can be used, for example, with the drive wheels of Figures 3 and 4 to convert torque from a motor and drive shaft to the drive wheels. This simple design is illustrative; other transfer structures can be used.

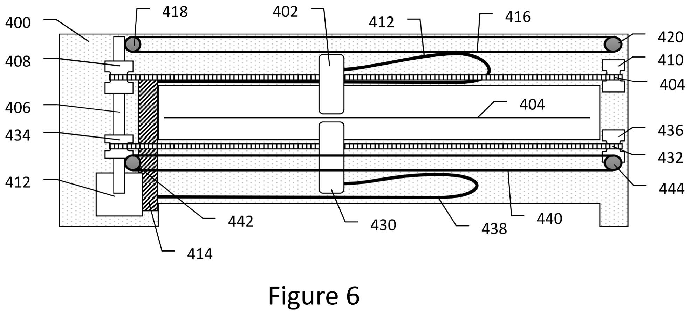

Figure 6 shows another illustrative scanning sensor assembly with moving bearing surface. Here, each scanning head 402, 430 is fixed to a drive belt 404, 432, respectively, directly (or, optionally, indirectly) driven by the drive wheels 408, 434 on drive shaft 406, which is coupled to a motor 412, with the drive belts 404, 432 also supported by idlers 410, 436. Further, each scanning head 402, 430 has a respective cable 412, 438 coupled to the electronics cabinet 414. Rather than using the drive belts 404, 432 as moving bearing supports for the cables 412, 438, a separate moving bearing surface is provided.

In the upper portion of the housing 400, a moving bearing support is provided as a bearing belt 416, driven by a bearing drive wheel at 418 and carried over an opposed idler 420. In the lower portion of the housing 400, a bearing belt 440 is driven by a drive wheel 442 and carried over an opposed idler at 444. Proper selection of gearing to couple the bearing drive wheels 418, 442 to the drive shaft 440 allows 1:1 motion of the drive belts 416, 440 in relation to the measurement heads 402, 430, preventing abrasion of the cables 412, 438.

In this example, the drive belts 404, 432 for the measurement heads 402, 430 have widths which are at least 2, and generally 3 times the thickness thereof, and are positioned so that the widths are perpendicular to the width and/or MD for sheet material 16. The bearing belts, on the other hand, have bearing surfaces that are parallel to the width of the sheet material 16.

Optionally, instead, the bearing belts 416, 440 may be free moving. Again, abrasion would be avoided by allowing the bearing belts 416, 440 to move with the respective cables 412, 438

The benefits of the preceding can take several forms, though not all are required for any particular implementation to add value. First, the design, by reducing abrasion on the cables, reduces or prevents generation of debris. All processes are sensitive to some degree to debris generation and associated failure of the product or reduction in product quality. Battery electrode manufacturing is sensitive to foreign particles that could puncture the electrodes and lead to battery shorting and even fire and explosion.

For example, permeable bags or other structures in a battery cell, including various Lithium technologies, can be punctured by debris, and/or debris can cause shorting through the bags between the separated anodes and cathodes when the anodes and cathodes are built into a stack within the battery cell. Depending on the nature of the debris, particles can also contaminate the cell interior and begin to migrate within the electrolyte. Presence of debris can be identified and lead to failure of a manufactured lot to be released to subsequent processing. Moreover, debris, when present, adds time and other requirements to maintenance processes.

Abrasion prevention increases the lifespan of the cabling thereby increasing maintenance cycles and reducing total cost of ownership to customers. That is, when abrasion takes place, the internal conductors can be damaged or exposed, which is highly undesirable in the process. If conductors get damaged, conductive material debris can land in the battery electrodes, again contributing, potentially, to internal shorting of a battery cell either between anodes and cathodes. Conductive foreign material in a battery cell can also migrate to vulnerable locations causing shorting at other locations in the cell, such as near feedthrough pins.

With less need to provide durable jacketing on the cables, the cables can be smaller. Thus cabling can be guided in a narrower channel and/or used with smaller structures and (decreased bend radius) leading to more compact designs without increasing friction and associated abrasive wear. The desire for reduced footprint in a process/manufacturing line is generally strong with any particular facility. It is desired that the scanning systems minimize space requirements.

Without friction-based wear concerns for cable jacketing, the available range of materials and designs that can be considered for both cable jacketing and drive belts increases. Cost reduction and supply chain redundancy can thus be addressed.

Referring again to Figure 3, an example scanning sensor assembly for scanning a sheet material is shown. The assembly includes a first measurement head (either measurement head 210 or measurement head 230), a first drive belt fixedly coupled to the first measurement head (either first drive belt 216 or second drive belt 236), a first motor coupled to the first drive belt (for example motor 222), the first motor controlling position of the first measurement head using the first drive belt, a first electronics cabinet (either first electronics cabinet 214 or second electronics cabinet 234), a first cable coupling the first electronics cabinet to the first measurement head (either first cable 212 or second cable 232), and a first moving bearing surface adapted to move with the first measurement head, wherein the first cable rests against the first moving bearing surface (either region 226 of first drive belt 216, or region 242 of second drive belt 236).

Referring again to Figure 4, a scanning sensor assembly for scanning a sheet material is shown. The assembly includes a first measurement head (either first measurement head 252 or second measurement head 280), a first drive belt fixedly coupled to the first measurement head (either first drive belt 258 or second drive belt 284), a first motor coupled to the first drive belt, the first motor controlling position of the first measurement head using the first drive belt (such as any of motor 270, motor 297, or motor 299), a first electronics cabinet (electronics cabinet 256), a first cable coupling the first electronics cabinet to the first measurement head (either cable 254 or cable 282), and a first moving bearing surface adapted to move with the first measurement head (either region 296 of drive belt 258, or region 298 of drive belt 284), wherein the first cable rests against the first moving bearing surface.

Referring now to Figure 6, another scanning sensor assembly for scanning a sheet material is shown. The assembly includes a first measurement head (measurement head 402, or measurement head 430), a first drive belt fixedly coupled to the first measurement head (first drive belt 404 or second drive belt 432), a first motor coupled to the first drive belt (motor 412 for example), the first motor controlling position of the first measurement head using the first drive belt, a first electronics cabinet (electronics cabinet 414), a first cable coupling the first electronics cabinet to the first measurement head (cable 412 or cable 438), and a first moving bearing surface adapted to move with the first measurement head (bearing belt 416 or bearing belt 440), wherein the first cable rests against the first moving bearing surface.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description.

The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

## Claims

1. A scanning sensor assembly for scanning a sheet material comprising:
a first measurement head;
a first drive belt fixedly coupled to the first measurement head;
a first motor coupled to the first drive belt, the first motor controlling position of the first measurement head using the first drive belt;
a first electronics cabinet;
a first cable coupling the first electronics cabinet to the first measurement head; and
a first moving bearing surface adapted to move with the first measurement head, wherein the first cable rests against the first moving bearing surface.

2. The scanning sensor assembly of claim 1, wherein the first moving bearing surface moves with the first measurement head on a 1:1 ratio, to thereby prevent abrasion damage to the first cable.

3. The scanning sensor assembly of either of claims 1 or 2, wherein the first moving bearing surface is a portion of the first drive belt;
optionally wherein the first moving bearing surface is a portion of the first drive belt on a far side of the first measurement head, relative to the first electronics cabinet.

4. The scanning sensor assembly of claim 3, wherein:
the scanning sensor assembly is adapted to receive the sheet material with the sheet material moving a machine direction, such that the first motor drives the first measurement head in a cross direction perpendicular to the machine direction;
the first drive belt has a width and thickness, the width exceeding the thickness, and the first drive belt is positioned with the width parallel to the sheet as the sheet passes in the machine direction.

5. The scanning sensor assembly of claim 3, further comprising a housing having a first end portion, a second end portion and a sheet metal channel therebetween, wherein:
the first motor is positioned in the first end portion;
the first drive belt forms a loop from the first end portion to the second end portion, and back to the first end portion;
the first measurement head is configured to move back and forth on a line between the first end portion and the second end portion as the first drive belt moves; and
the first moving bearing surface is a portion of the first drive belt between the measurement head and the second end portion.

6. The scanning sensor assembly of either of claims 1 or 2, wherein the first moving bearing surface is a bearing belt separate from the first drive belt;
Optionally wherein the bearing belt is coupled to the first motor by a gear system and a drive shaft.

7. The scanning sensor assembly of claim 6, wherein:
the scanning sensor is adapted to receive the sheet material with the sheet material moving a machine direction, such that the first motor drives the measurement head in a cross direction perpendicular to the machine direction;
the first drive belt has a width and thickness, the width exceeding the thickness, and the first drive belt is positioned with the width parallel to the sheet as the sheet passes in the machine direction.

8. The scanning sensor assembly of claim 6, wherein:
the scanning sensor is adapted to receive the sheet material with the sheet material moving a machine direction, such that the first motor drives the first measurement head in a cross direction perpendicular to the machine direction;
the first drive belt has a width and thickness, the width exceeding the thickness, and the first drive belt is positioned with the width perpendicular to the sheet as the sheet passes in the machine direction.

9. The scanning sensor assembly of any preceding claim, further comprising:
a second measurement head;
a second drive belt fixedly coupled to the first measurement head;
a second cable coupled to the second measurement head; and
a second moving bearing surface adapted to move with the second measurement head, wherein the second cable rests against the second moving bearing surface;
optionally wherein one of:
the second cable couples the second measurement head to the first electronics cabinet; or
the second cable couples the second measurement head to a second electronics cabinet.

10. The scanning sensor assembly of claim 9, wherein the second drive belt is coupled to the first motor, the first motor controlling position of the second measurement head using the second drive belt.

11. The scanning sensor assembly of claim 9, wherein the second drive belt is coupled to a second motor, the second motor controlling position of the second measurement head using the second drive belt.

12. The scanning sensor assembly of claim 11, wherein the first motor and the second motor are controlled to move the first measurement head and the second measurement head synchronously.

13. A method of operating a scanning sensor in a sheet manufacturing system, the method comprising:
controlling a position of a measurement head of the scanning sensor, wherein the measurement head is coupled by a cable to an electronics cabinet; and
moving a moving bearing surface with the measurement head, wherein the cable rests on the moving bearing surface, such that the cable is protected from abrasion by the moving bearing surface.

14. The method of claim 13, wherein the step of controlling the position of the measurement head is performed by operating a motor that controls a drive belt, the drive belt fixedly coupled to the measurement head, and the moving bearing surface is a portion of the drive belt;
optionally wherein the moving bearing surface is a portion of the drive belt located on a far side of the measurement head, relative to the electronics cabinet.

15. The method of claim 13, wherein the step of controlling the position of the measurement head is performed by operating a motor that controls a drive belt, and the moving bearing surface is a portion of a bearing belt separate from the drive belt, further wherein the step of moving the moving bearing surface is performed by controlling movement of the bearing belt.
